## Europäisches Patentamt

## European Patent Office

## Office européen des brevets

(19)

(11) Veröffentlichungsnummer: **0 062 187**
**B1**

(12) **EUROPÄISCHE PATENTSCHRIFT**

(45) Veröffentlichungstag der Patentschrift:
**13.02.85**

(51) Int. Cl.⁴: **F 16 K  15/20**

(21) Anmeldenummer: **82102109.4**

(22) Anmeldetag: **16.03.82**

(54) **Luftreifenventil.**

(30) Priorität: **03.04.81  DE 3113400**

(43) Veröffentlichungstag der Anmeldung:
**13.10.82 Patentblatt 82/41**

(45) Bekanntmachung des Hinweises auf die Patenterteilung:
**13.02.85 Patentblatt 85/7**

(84) Benannte Vertragsstaaten:
**AT FR GB NL**

(56) Entgegenhaltungen:
**DE - C - 1 159 794**
**FR - A - 491 757**
**FR - A - 702 493**
**US - A - 1 846 315**
**US - A - 2 311 748**
**US - A - 2 378 384**
**US - A - 2 390 026**
**US - A - 4 016 900**

(73) Patentinhaber: **Alligator Ventilfabrik GmbH,
Postfach 1280, D-7928 Giengen/Brenz (DE)**

(72) Erfinder: **Lutz, Sepp, Wasserschapfstrasse 34,
D-7928 Giengen/Brenz (DE)**

(74) Vertreter: **Schmid, Berthold et al, Patentanwälte
Dipl.-Ing. B. Schmid Dr. Ing. G. Birn Dipl.-Phys. H.
Quarder Falbenhennenstrasse 17,
D-7000 Stuttgart 1 (DE)**

BUNDESDRUCKEREI BERLIN

## Beschreibung

Die Erfindung bezieht sich auf ein Luftreifenventil mit einem rohrförmigen Ventilschaft mit einem Befestigungsfuß, wobei der Ventilschaft aus wenigstens zwei Teilen besteht, von denen das eine Ventilschaftteil, das Grundteil, den Befestigungsfuß und am davon entfernten Kopfende ein Befestigungsaußengewinde für das andere Ventilschaftteil trägt, wobei letzteres den Ventilsitz aufweist und/oder einen Ventileinsatz aufnimmt.

Derartige Luftreifenventile sind in verschiedener Hinsicht besonders vorteilhaft. Das Grundteil kann nämlich von einfacher Bauart sein, weil es lediglich die Funktion eines Trägerteils für das andere Ventilschaftteil übernimmt. Andererseits kann letzteres dem Ventileinsatz bzw. Ventilmechanismus entsprechend geformt und dimensioniert sein. Lediglich an seinem dem Grundteil zugeordneten Ende muß es auf die Gestalt des Grundteils abgestimmt sein. Im übrigen ist man hinsichtlich der Konstruktion frei, d. h. ausschließlich durch den zu verwendenden Ventileinsatz gebunden. Damit steht die Möglichkeit offen, mit dem Grundteil ein beliebig geformtes, anderes Ventilschaftteil zu verbinden. Infolgedessen können bei diesem Luftreifenventil praktisch alle bislang bekanntgewordenen Ventileinsätze verwendet werden. Auch ein Umrüsten dieses Luftreifenventils zu einem späteren Zeitpunkt von einem Ventilsatz auf einen anderen ist problemlos möglich. Hierzu ist noch nicht einmal das Abnehmen des Grundteils von der Felge notwendig. Es reicht, wenn man das andere Ventilschaftteil auswechselt.

Ein Ventil der eingangs beschriebenen Art ist durch die FR-A-491 757 (Schrader's) bekanntgeworden. Das andere, äußere Teil des Ventilschafts ist in das Grundteil eingesteckt und mit Hilfe einer Überwurfmutter in bekannter Weise gehalten. Die Überwurfmutter wird auf das Befestigungsaußengewinde des Grundteils aufgeschraubt, welches bis zum Befestigungsfuß reichen kann. In diesem Falle läßt sich auf das Befestigungsaußengewinde auch noch eine Felgenmutter aufschrauben, mit deren Hilfe man den Ventilschaft und damit das Luftreifenventil unverschiebbar am Felgenloch halten kann. Um im Grundteil einen Ventileinsatz unterbringen zu können, muß es eine verhältnismäßig große Länge aufweisen. Dies bedeutet, daß man relativ viel Zerspannungsarbeit leisten muß, wenn man das Außengewinde des Grundteils bis zum Befestigungsfuß durchführen will. Dieser Arbeitsgang ist zeitaufwendig und teuer. Es kommt noch hinzu, daß auch das Aufschrauben der Felgenmutter ein zeitraubender Arbeitsgang ist. Andererseits ist es aber notwendig, daß das Ventil beim Aufpumpen gegen Hindurchschieben durch das Felgenloch gesichert ist. Verzichtet man auf eine derartige Sicherung, so kann es zu schwerwiegenden Folgen kommen.

Die Aufgabe der Erfindung besteht infolgedessen darin, ein Luftreifenventil der eingangs genannten Art so weiterzubilden, daß die eingangs erwähnten Vorteile erhalten, andererseits aber eine Sicherung des Ventils gegen Durchschieben durch das Felgenloch auf eine einfache und kostensparende Weise erreicht wird.

Zur Lösung dieser Aufgabe wird erfindungsgemäß vorgeschlagen, daß das Luftreifenventil gemäß dem Oberbegriff des Anspruchs 1 entsprechend dem kennzeichnenden Teil dieses Anspruchs ausgebildet ist. Durch die Ausbildung des anderen Ventilschaftteils als Aufschraubteil spart man nicht nur die erwähnte Überwurfmutter ein, vielmehr schafft man auf diese Weise ohne ein zusätzliches Teil eine Abstützfläche für die das Grundteil umgebende Stützhülse. Letztere stützt sich andernends an der Felge ab. Da sie um einen vorgegebenen Betrag stauchbar ist, kann man ihre Länge so dimensionieren, daß sie ohne mechanische Einwirkung auf das Ventil in der Art einer axial wirkenden Druckfeder beidendig abgestützt ist. Wenn beim Füllen des Luftreifens auf das Ventil eine axiale Kraft ausgeübt wird, so läßt sich die Stützhülse um den vorbestimmten Betrag axial noch stauchen, d. h. insgesamt liegt ein axial begrenzt elastisch nachgebendes System vor. Wenn beim Pumpen eine gewisse axiale Verschiebung des Luftreifenventils erfolgt ist, so stellt sich aufgrund der federelastischen Eigenschaft der Stützhülse nach Wegfall der Belastung der alte Zustand automatisch wieder her. Im übrigen kommt dieser elastischen Rückstellwirkung bereits bei der Montage eine besondere Bedeutung zu, weil das Grundteil beim montieren des Aufschraubteils durch das Felgenloch hindurch nach außen gezogen wird, sobald über das Aufschraubteil eine axiale Kraft auf die Stützhülse ausgeübt wird. Im übrigen kann das Felgenloch relativ klein ausgebildet sein, weil das andere Ventilschaftteil nicht in das Grundteil eingesteckt, sondern auf dieses außen aufgeschraubt wird. Ein kleines Felgenloch wird aber schon allein aus festigkeitsmäßigen Gründen immer angestrebt. Dies gilt besonders bei schmalen Fahrradfelgen.

In Weiterbildung der Erfindung wird vorgeschlagen, daß die Stützhülse aus Kunststoff gefertigt und vorzugsweise in ihrem mittleren Bereich balgartig gestaltet ist. Die Länge des Balgs und dessen Ausbildung im einzelnen bestimmen das Maß, um welches man die Stützhülse maximal zusammendrücken kann. Der Grad der elastischen Nachgiebigkeit ist also vorbestimmt, und bei Blocklage des Balgs wird die Stützhülse zumindest in axialer Richtung starr. Andererseits ist aber der Grad der federelastischen Zusammenpressung relativ gering und so bemessen, daß der Ventilschaft nur um wenige Millimeter gegenüber der Felge längs verschoben werden kann. Hierdurch wird eine Beschädigung des Schlauchs mit Sicherheit vermieden. Die Stützhülse ist aber sowohl ohne als auch mit balgartigem Teil ein relativ einfaches Bauelement mit geringen Gestehungskosten und vernachlässigbaren Montagekosten.

Eine andere Ausgestaltung der Erfindung besteht darin, daß die Stützhülse an ihrem dem Fußende des Grundteils zugeordneten Ende einen elastisch anschmiegbaren Flansch zur Anlage an einer Felge aufweist. Er gewährleistet nicht nur ein ordentliches Aussehen in diesem Bereich, sondern eine verbesserte Abstützung gegen Kippen des Ventils sowie eine gute Abdichtung des Felgenlochs gegen Wasser, Schmutz und dgl.

Das Aufschraubteil und die Stützhülse sind gemäß einer weiteren Variante der Erfindung über eine Schnapp- oder Gewindeverbindung lösbar gekuppelt. Diese gewährleistet bei üblicher Ausbildung eine problemlose und rasche Verbindung der beiden Teile sowie eine staub- und gegebenenfalls auch luftdichte Ausführung.

Eine andere Variante der Erfindung besteht darin, daß das Aufschraubteil und die Stützhülse einstückig, insbesondere aus Kunststoff gefertigt sind. Hier sind an den Kunststoff besondere Anforderungen zu stellen, weil er einerseits eine ausreichende Festigkeit im Bereich des Ventileinsatzes und andererseits eine gute Elastizität im Bereich seines balgartigen Schaftteils sowie seines Flansches gewährleisten muß. Hinsichtlich der Montage ist diese Variante der Erfindung jedoch besonders vorteilhaft.

Die Erfindung wird nachstehend an Hand der Zeichnung näher erläutert.

Die Zeichnung zeigt verschiedene Ausführungsbeispiele der Erfindung. Es stellt dar

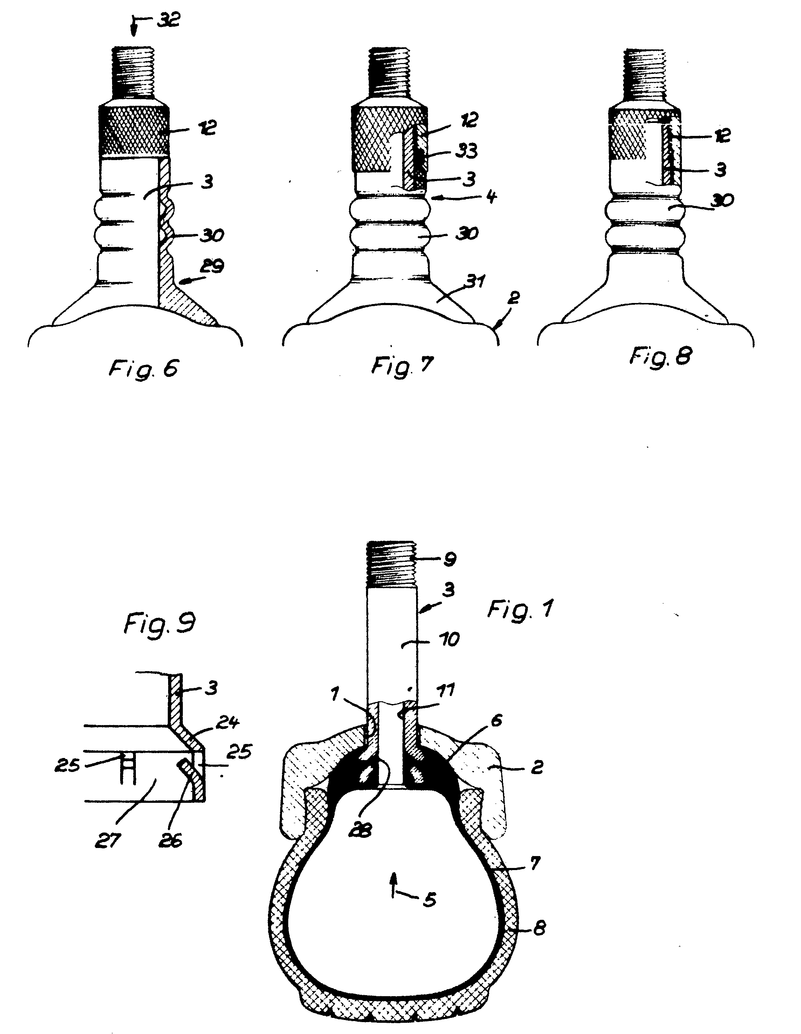

Fig. 1 einen radialen Schnitt durch eine Felge mit Schlauch und Reifen im Bereich des Ventils, mit teilweise geschnittenem Grundteil, jedoch ohne Aufschraubteil, Ventileinsatz und Stützhülse,

Fig. 2 bis 5 vier verschiedene Varianten des Lufttreifenventils, teilweise jeweils in Halbschnitten, jedoch ohne Befestigungsfuß und Stützhülse,

Fig. 6 bis 8 wiederum teilweise in Halbschnitten drei verschiedene Varianten der Stützhülse,

Fig. 9 in etwas vergrößerter Darstellung einen Ausschnitt aus dem Befestigungsfuß des Grundteils.

Durch das Felgenloch 1 der Felge 2 beispielsweise eines Fahrrads ist das Grundteil 3 eines Lufttreifenventils 4 in Pfeilrichtung 5 hindurchgesteckt. Der anvulkanisierte Befestigungsfuß 6 des Grundteils 3 ist an einen Schlauch 7 anvulkanisiert, der an seiner Außenseite von einem in der Felge 2 gehaltenen Reifen 8 umgeben ist. Das Grundteil 3 trägt an seinem Kopfende ein vergleichsweise kurzes Befestigungsgewinde 9 und es besteht ansonsten, wenn man vom Befestigungsfuß absieht, aus einem außen glatten Schaft 10. Außerdem ist eine im Querschnitt gleichbleibende, glatte Durchgangsbohrung 11 vorgesehen, die sich lediglich am Befestigungsfuß erweitert.

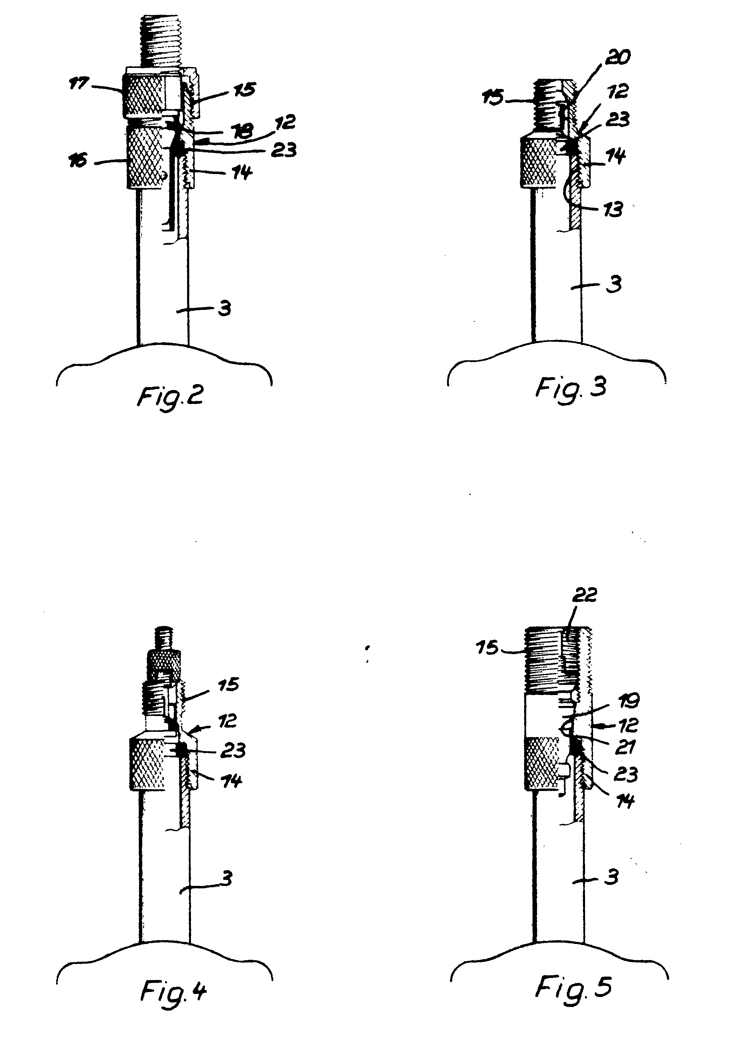

Das als Außengewinde ausgebildete Befestigungsgewinde 9 des Grundteils 3 nimmt ein Aufschraubteil 12 auf, welches demnach an seinem dem Grundteil 3 zugekehrten Ende ein Innengewinde 13 trägt bzw. als Schraubhülse 14 ausgebildet ist. Im übrigen kann das Aufschraubteil 12, wie die Fig. 2 bis 5 ausweisen, recht verschieden gestaltet sein, wobei allerdings seine Länge im wesentlichen jeweils gleich ist. Außerdem ist zweckmäßigerweise bei allen Ausführungen am freien Ende ein Außengewinde 15 vorgesehen. Der Durchmesser des rohrförmigen Aufschraubteils 12 kann im großen und ganzen erhalten bleiben wie bei den Ausführungsbeispielen gemäß Fig. 2 und 5, oder reduziert sein entsprechend den Fig. 3 und 4, wo das Aufschraubteil 12 die Gestalt einer Reduzierhülse hat. Allen Ausführungsformen ist jedoch gemein, daß sie eine jeweils gleich dimensionierte Schraubhülse 14 aufweisen, die allenfalls hinsichtlich ihrer Länge variieren kann. Außen ist eine Rändelung 16 angebracht, die selbstverständlich bei den einzelnen Ausführungen auch verschieden gewählt werden kann.

Beim Ausführungsbeispiel gemäß Fig. 2 ist ein herkömmlicher Ventileinsatz 18 vorgesehen, wie man ihn bei Fahrradventilen schon seit Jahrzehnten kennt und der mittels einer Überwurfmutter 17 gehalten wird. Fig. 5 zeigt einen ebenfalls weltweit verbreiteten und vorbekannten Ventileinsatz 19, der vielfach auch als kurzer Ventileinsatz bezeichnet wird und im Gegensatz zur Ausführungsform gemäß Fig. 2 einen kleinen Ventilstößel besitzt.

Auf weitere Details dieser und auch der anderen Ventileinsätze kommt es hier nicht an, weil sie vorbekannt sind und ihre Ausbildung lediglich insoweit bedeutungsvoll ist, als sie die Form der Bohrung 20 des Aufschraubteils 12 bestimmen, also beispielsweise festlegen, wo ein Sitz 21 sein soll oder ob ein Innengewinde 22 benötigt wird und an welcher Stelle es sein muß. Bei allen Ausführungsformen ist aber zwischen das Grundteil 3 und das Aufschraubteil 12 ein Dichtring 23 geschaltet, der vorzugsweise auf der Stirnkante des Grundteils 3 aufliegt und sich an einem gegenüberliegenden Absatz des Aufschraubteils 12 abstützt.

Das Grundteil 3 besteht, wie bereits erläutert, im wesentlichen aus einem Rohr. Sein Fußende 24 ist aufgeweitet, wie man insbesondere aus Fig. 9 gut ersieht. An dem beim Ausführungsbeispiel zylindrischen Teil des Fußendes sind mehrere am Umfang gleichmäßig verteilte Fenster 25 ausgestanzt. Vorteilhafterweise wurde jedoch der Stanzschnitt so geführt, daß noch Zungen 26 stehenbleiben. Diese ragen nach innen in den Erweiterungsraum 27. Beim Anvulkanisieren des Befestigungsfußes 6 bilden sich nun Brücken 28 durch diese Fenster 25 hindurch. Sie verbinden die äußere mit der inneren Ummantelung, welche sich in den Erweiterungsraum 27 hinein erstreckt und in der die Zungen 26 gewissermaßen verankert sind. Aufgrund dieser Konstruktion erhält man einerseits eine sichere Befestigung des Grundteils 3 in seinem anvulkanisierten Befestigungsfuß 6 und andererseits einen ungestörten Durchfluß und einen stets gleichbleibenden Innendurchmesser bis in den Schlauch 7 hinein.

Den Fig. 6 bis 8 entnimmt man, daß über den Schaft des Grundteils 3 eine Stützhülse 29 geschoben ist, die vorzugsweise aus Kunststoff besteht und deren mittlerer Bereich in der Art eines Faltenbalgs 30 geformt ist. Außerdem ist es vorteilhaft, wenn sie einen vergleichsweise großen Flansch 31 enthält, der elastisch genug ist, um sich auf der unebenen Oberfläche der Felge 2 möglichst dichtend anzuschmiegen. Damit bildet die Stützhülse 29 ein Distanzglied zwischen der Felge 2 und dem Aufschraubteil 12. Aufgrund des federelastischen Faltenbalgs 30 läßt sich das Ventil beispielsweise beim Aufpumpen so weit in Richtung des Pfeils 32 ins Innere des Schlauchs 7 hineindrücken, bis die Falten des Faltenbalgs 30 auf Blocklage sind. Das System ist auf diese Weise relativ elastisch und bietet andererseits aber genügend Schutz, um eine Beschädigung des Schlauchs beim Aufpumpen zu unterbinden. Andererseits ist die Montage der Stützhülse 29, welche die vorbekannte Felgenmutter entbehrlich macht, blitzschnell vorzunehmen.

Beim Ausführungsbeispiel gemäß Fig. 6 liegt das kopfseitige Ende der Stützhülse 29 am zugeordneten Hülsenrand des Aufschraubteils 12 bzw. deren Schraubhülse 14 an. Beim nächsten Ausführungsbeispiel gemäß Fig. 7 ist eine Verbindung dieser beiden Teile über einen ringförmigen Schnappverschluß 33 vorgesehen. Gemäß Fig. 8 ist es auch möglich, die Stützhülse 29 und das Aufschraubteil 12 einstückig zu fertigen, wodurch sich die Montage noch weiter vereinfacht. Hier wäre dann allerdings eine sogenannte Hart-Weich-Kombination vorteilhaft, bei welcher man für den Faltenbalg 30 weichelastisches Material nehmen würde.

## Patentansprüche

1. Luftreifenventil mit einem rohrförmigen Ventilschaft mit einem Befestigungsfuß (6), wobei der Ventilschaft aus wenigstens zwei Teilen besteht, von denen das eine Ventilschaftteil, das Grundteil (3), den Befestigungsfuß (6) und am davon entfernten Kopfende ein Befestigungsaußengewinde (9) für das andere Ventilschaftteil (12) trägt, wobei letzteres den Ventilsitz (21) aufweist und/oder einen Ventileinsatz (18, 19) aufnimmt, dadurch gekennzeichnet, daß das andere Ventilschaftteil als Aufschraubteil (12) ausgebildet und unmittelbar auf das Grundteil (3) aufgeschraubt ist, und daß das Grundteil (3) von einer Stützhülse (29) umgeben ist, die wenigstens teilweise in axialer Richtung um einen vorbestimmten Betrag stauchbar ist.

2. Ventil nach Anspruch 1, dadurch gekennzeichnet, daß die Stützhülse (29) aus Kunststoff gefertigt und vorzugsweise in ihrem mittleren Bereich balgartig (30) gestaltet ist.

3. Ventil nach Anspruch 1 oder 2, dadurch gekennzeichnet, daß die Stützhülse (29) an ihrem dem Fußende (24) des Grundteils (3) zugeordneten Ende einen elastisch anschmiegbaren Flansch (31) zur Anlage an einer Felge (2) aufweist.

4. Ventil nach wenigstens einem der vorhergehenden Ansprüche, dadurch gekennzeichnet, daß das Aufschraubteil (12) und die Stützhülse (29) über eine Schnapp- (33) oder Gewindeverbindung lösbar gekuppelt sind.

5. Ventil nach wenigstens einem der Ansprüche 1 bis 3, dadurch gekennzeichnet, daß das Aufschraubteil (12) und die Stützhülse (29) einstückig, insbesondere aus Kunststoff gefertigt sind.

## Claims

1. Valve for pneumatic tyre and having a tubular valve stem with a fixing foot (6), the valve stem consisting of at least two parts, of which one valve stem part, the base part (3), carries the fixing foot (6) and, at the head end remote therefrom, an external screw-thread (9) for attachment of the other valve stem part (12), the latter carrying the valve seat (21) and/or accommodating a valve insert (18, 19), characterised in that the other valve stem part is constructed as a screw-on part (12) and is screwed directly on to the base part (3), and in that the base part (3) is enclosed by a sleeve (29) which is at least partially compressible by a predetermined amount in an axial direction.

2. Valve according to claim 1, characterised in that the sleeve (29) is made from synthetic plastics material and is preferably of bellows-like construktion in its middle zone (30).

3. Valve according to claim 1 or 2, characterised in that the sleeve (29) comprises at its end which is associated with the foot end (24) of the base part (3) an elastically resiliently pliable flange (31) which can bear on a rim (2).

4. Valve according to at least one of the preceding claims, characterised in that the screw-on part (12) and the sleeve (29) are separably coupled via a snap-action or threaded joint (33).

5. Valve according to at least one of claims 1 to 3, characterised in that the screw-on part (12) and the sleeve (29) are made in one piece, in particular from synthetic plastics material.

## Revendications

1. Valve pour pneumatique, du type comportant un corps de valve tubulaire qui présente un pied de fixation (6) et qui est constitué d'au moins deux parties dont l'une comporte le fût (3), le pied de fixation (6) et, à l'extrémité de tête opposée à celui-ci, un filetage extérieur de fixation (9) qui est destiné à l'autre partie de valve (12), cette dernière comportant le siège de valve (21) et/ou recevant un obturateur (18, 19), caractérisée en ce que la seconde partie de valve est réalisée sous la forme d'une partie pouvant être vissée (12) et est vissée directement sur le fût (3), tandis que ce fût (3) est entouré par un fourreau de support (29) qui peut être écrasé au moins partiellement suivant la direction axiale et sur une longueur prédéterminée.

2. Valve suivant la revendication 1, caractérisée en ce que le fourreau de support (29) est réalisé en matière plastique et en ce qu'il est conformé, avantageusement dans sa partie médiane, en forme de soufflet (30).

3. Valve suivant l'une des revendications 1 ou 2, caractérisée en ce que le fourreau de support (29) comporte, en vue de son appui sur une jante (2), une collerette (31) qui peut épouser élastiquement cette dernière et qui est disposée à l'extrémité du fourreau associée à l'extrémité côté pied (24) du fût (3).

4. Valve suivant au moins l'une des revendications précédentes, caractérisée en ce que la pièce à visser (12) et le fourreau de support (29) sont assemblés de manière amovible par l'intermédiaire d'une liaison par enclenchement (33) ou par filetage.

5. Valve suivant au moins l'une des revendications 1 à 3, caractérisée en ce que la pièce à visser (12) et le fourreau de support (29) sont réalisés en une seule pièce, notamment en matière plastique.

Fig. 6

Fig. 7

Fig. 8

Fig. 9

Fig. 1

Fig.2

Fig. 3

Fig.4

Fig.5